# EUROPEAN PATENT SPECIFICATION

(11) **EP 4 531 635 B1**
(45) Date of publication and mention of the grant of the patent: **23.07.2025**
(21) Application number: 23732230.0
(22) Date of filing: 26.05.2023
(51) Int. Cl.: A47B 97/00, A47G 1/06

(54) **SUPPORT DEVICE FOR BOARD PANELS, BOARD PANEL SUPPORT AND JUNCTION SYSTEM AND RELATED PREPARATION METHOD**
TRÄGERVORRICHTUNG FÜR PLATTEN, PLATTENTRÄGER UND VERBINDUNGSSYSTEM SOWIE ZUGEHÖRIGES HERSTELLUNGSVERFAHREN
DISPOSITIF DE SUPPORT POUR PLANCHES, SYSTÈME DE SUPPORT ET DE JONCTION DE PLANCHES ET PROCÉDÉ DE PRÉPARATION ASSOCIÉ

(30) Priority: 30.05.2022 PT 2022118021
(43) Date of publication of application: 09.04.2025
(73) Proprietor: Bi-Silque, S.A., 3885-528 Esmoriz (PT)
(72) Inventor: VASCONCELOS, André, 3880-223 Ovar (PT)
(74) Representative: Monteiro Alves, Inês
(86) International application number: PCT/PT2023/050013
(87) International publication number: WO 2023/234792

(56) References cited:
- CN-U- 203 293 768
- US-B1- 11 089 873
- US-B2- 10 939 775

## Description

### Technical Field

The present invention refers to a support device for board panels, which is used in a board panel support and junction system used as office products, such as products to support teaching or as decorative products in constructions, for example households and apartments.

### Background Art

In our daily lives, it is commonplace to use boards configured for writing, for example whiteboards and blackboards, or boards configured for supporting sheets of paper. Said boards can be used as products to support teaching and training in companies and schools, products for fixing notices or communications or even decorative boards, whereon photographs are fastened.

The boards of the state of the art have a limitation in situations where the need arises to position different boards in adjacent positions, since said boards usually have a frame, which prevents the suitable junction of the boards, because an interval between the adjacent boards is formed, resulting in a discontinuity of the set of boards, which entails drawbacks especially when the boards are those used for writing. Additionally, the interval also provides undesirable esthetic effects. US10939775B2 and CN203293768U show prior art which can be considered as useful for understanding the invention.

### Solution to Problem and Advantageous Effects of Invention

The present invention solves the problems of the state of the art by means of the development of a support device for board panels, which is configured to be encased into two adjacent board panels by means of rails, wherein the rails are connected to said board panels. The support device for board panels is part of a board panel support and junction system, wherein the interval formed between the adjacent board panels is filled and hidden by a T-profile element.

Accordingly, the present invention has the advantage of connecting adjacent board panels such that the intervals formed between them are not apparent.

### Brief Description of Drawings

With a view to promoting an understanding of the principles according to the embodiments of the present invention, reference will be drawn to the embodiments illustrated in figures and to the language employed to describe them. In any case, it should be understood that there is no intention of limiting the ambit of the present invention to the content of the drawings. Any subsequent alterations or modifications of the inventive characteristics illustrated herein, as well as any additional applications of the principles and embodiments of the invention illustrated, that would normally occur to one skilled in the art in possession of this specification, are considered to be within the ambit of the invention claimed.
**Fig.1**

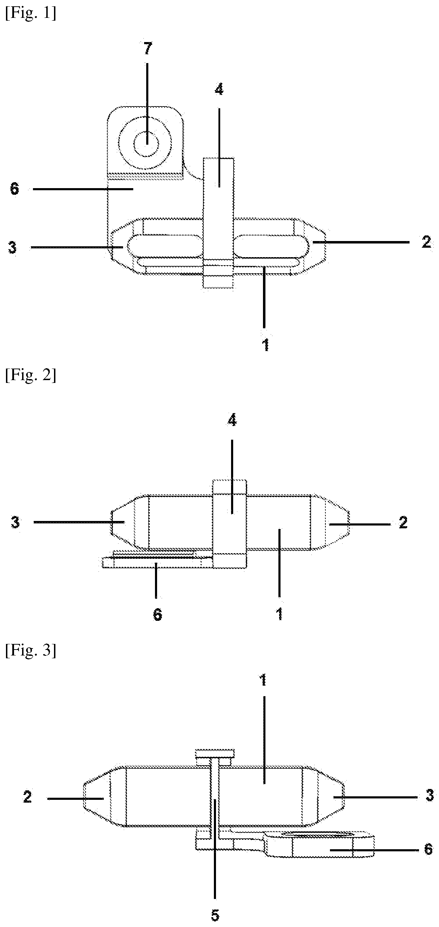

   [Fig.1] illustrates a front view of the support device for board panels;
**Fig.2**
   [Fig.2] illustrates a top view of the support device for board panels;
**Fig.3**
   [Fig.3] illustrates a bottom view of the support device for board panels;
**Fig.4**

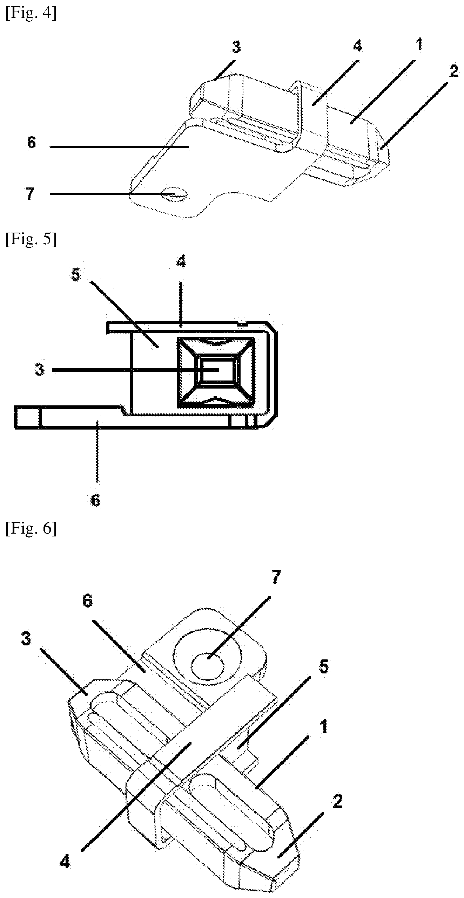

   [Fig.4] illustrates a rear view of the support device for board panels;
**Fig.5**
   [Fig.5] illustrates a side view of the support device for board panels;
**Fig.6**
   [Fig.6] illustrates a first perspective view of the support device for board panels;
**Fig.7**

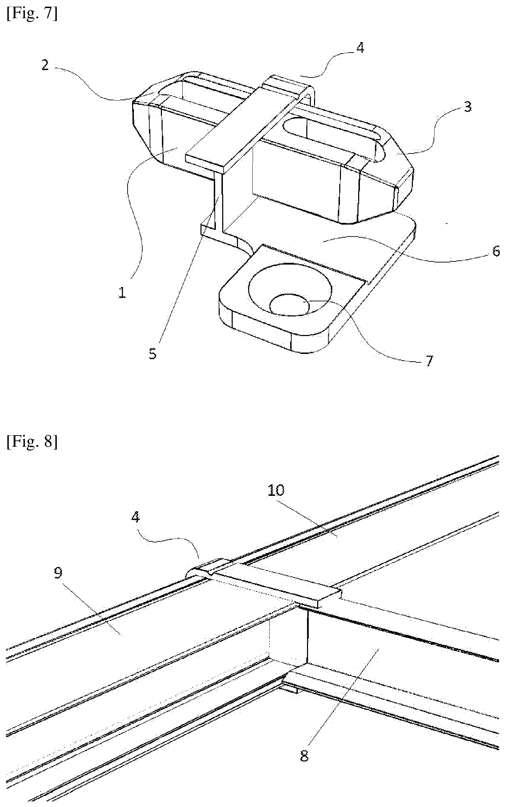

   [Fig.7] illustrates a second perspective view of the support device for board panels;
**Fig.8**
   [Fig.8] illustrates a first insertion view of the support device for board panels in a board panel support and junction system;
**Fig.9**

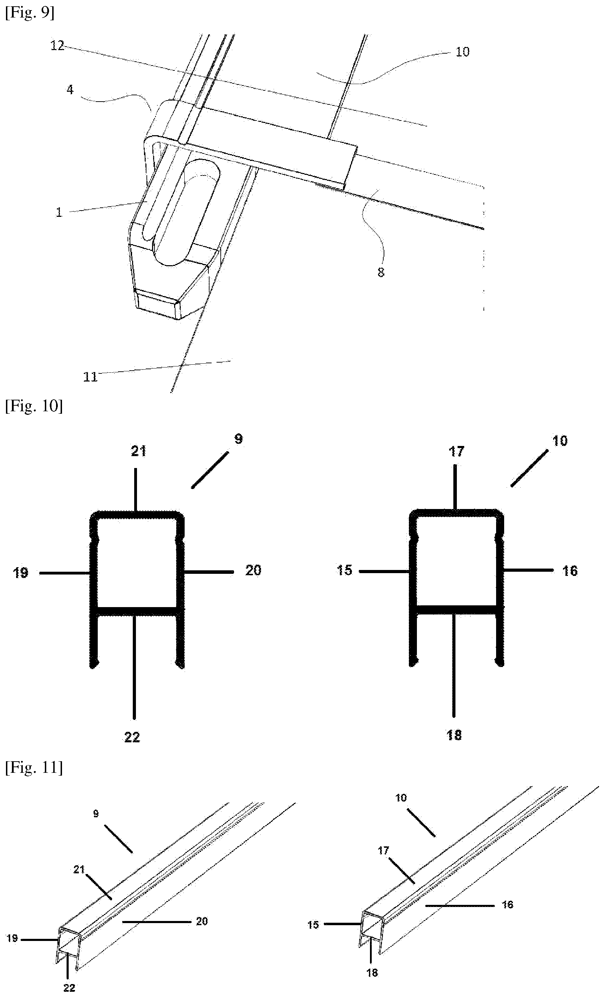

   [Fig.9] illustrates a second insertion view of the support device for board panels in a board panel support and junction system;
**Fig.10**
   [Fig.10] illustrates a view of a profiled rails section;
**Fig.11**
   [Fig.11] illustrates a perspective view of profiled rails;
**Fig.12**

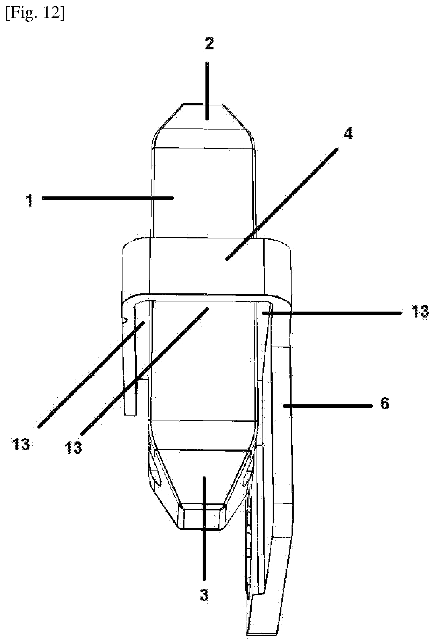

   [Fig.12] illustrates a perspective view of the support device for board panels;
**Fig.13**

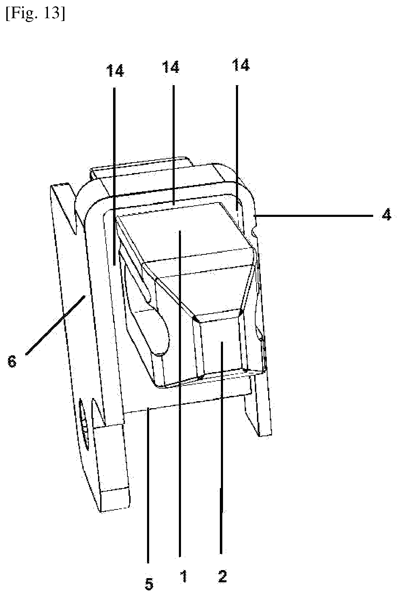

   [Fig.13] illustrates a perspective view of the support device for board panels;
**Fig.14**

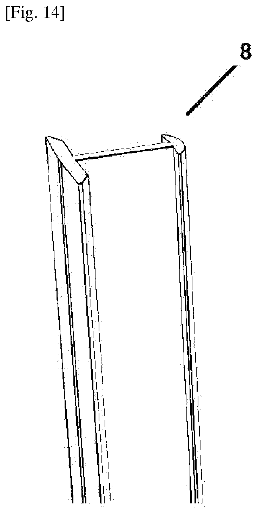

   [Fig.14] illustrates a perspective view of a T-profile element.

### Description of Embodiments

In a first aspect, the present invention refers to a support device for board panels comprising:
a connecting rod (1) with a first end (2) and a second end (3); and
a front bulkhead (4), which has a first portion disposed in a preceding position relative to said connecting rod (1) and a second portion disposed on the connecting rod (1), wherein said first portion is connected to said second portion; and
a rear bulkhead (6), which is disposed in a posterior position relative to said connecting rod (1) and is connected to said second portion of the front bulkhead (4); and
an intermediate bulkhead (5), which is simultaneously connected perpendicularly to a lower face of the front bulkhead (4), connected perpendicularly to a lower face of the connecting rod (1) and connected perpendicularly to a lower face of the rear bulkhead (6); and
an element connecting to a surface including an orifice (7), which is connected to the rear bulkhead (6); wherein
a first gap (13) is bordered by a portion of the lower face of the front bulkhead (4), by a portion of the upper face of the connecting rod (1), by a portion of the lower face of the rear bulkhead (6) and by a portion of the right face of the intermediate bulkhead (5); and wherein
a second gap (14) is bordered by a portion of the lower face of the front bulkhead (4), by a portion of the upper face of the connecting rod (1), by a portion of the lower face of the rear bulkhead (6) and by a portion of the left face of the intermediate bulkhead (5).

In the preferred embodiments of the present invention, the board (2) includes at least one entrance (6), at least one of the first end (2) and of the second end (3) are selected from the group consisting of a stem of a prism, a stem of a pyramid (as illustrated in figures 2 and 5), a stem of a cylinder or a stem of a cone, as illustrated in [Fig.7].

The first gap (13) and the second gap (14) of the support device for board panels are configured respectively for the insertion of a first profiled rail (10) and of a second profiled rail (9), as illustrated in figures 8 and 9.

The borders and the extension of the first gap (13) and of the second gap (14) of the support device for board panels, relative to the front bulkhead (4), to the connecting rod (1), to the rear bulkhead (6) and to the intermediate bulkhead (5) are illustrated in figures 12 and 13.

In the preferred embodiments of the support device for board panels, the connection between the intermediate bulkhead (5), the lower face of the front bulkhead (4), the lower face of the connecting rod (1) and the lower face of the rear bulkhead (6) configure an H-profile, as illustrated in [Fig.7]. The H-profile is especially configured to act as bulkhead and encasement of a first profiled rail (10) and of a second profiled rail (9), as illustrated in [Fig.8].

In the preferred embodiments of the support device for board panels, the element connecting to a surface including an orifice (7) and the rear bulkhead (6) are on the same plane, as illustrated in figures 3 and 7. Alternatively, as will be appreciated by those skilled in the art, the element connecting to a surface including an orifice (7) and the rear bulkhead (6) can be on different planes and parallel to each other, as illustrated in [Fig.6].

In the particularly preferred embodiments of the support device for board panels, the element connecting to a surface including an orifice (7) and the rear bulkhead (6) are disposed sideways relative to the plane including the intermediate bulkhead (5), as illustrated in figures 1 and 4. Further preferably, the plane including the intermediate bulkhead (5) corresponds to a central position of the longitudinal length of the support device for board panels. These preferred embodiments have the additional advantage of allowing the support device for board panels to be fastened to a surface, even in a situation wherein a first profiled rail (10) or a second profiled rail (9) are connected to the support device for board panels and a first panel (12) or a second panel (11) are already respectively connected to the first profiled rail (10) or to the second profiled rail (9).

It will be understood by persons skilled in the art that the element connecting to a surface including an orifice (7) is configured for fastening the support device for board panels to a surface comprising a wall or any surface vertical on which board panels may be disposed. The present invention also comprises the installation thereof on horizontal surfaces, said as ceilings, or even slanted surfaces. Fastening means known by persons skilled in the art, for example nails or screws are used, to fix that of the support device for board panels to a surface, by means of the passage of the fastening means through the orifice (7).

In the preferred embodiments of the support device for board panels, each side of the connecting rod (1) comprises, relative to the intermediate bulkhead (5), at least one cavity, as illustrated in [Fig.7]. The objective of inserting cavities into the connecting rod (1) is to reduce the quantity of material needed to prepare the support device for board panels.

In a second aspect, the present invention refers to a board panel support and junction system comprising a support device for board panels, as defined in the first aspect, and additionally comprises:
a first profiled rail (10), which has a first longitudinal plate (15) and a second longitudinal plate (16) orthogonally connected to a first cross plate (17) and to a second cross plate (18), wherein an encasement zone, bordered by said longitudinal plates (15,16) and by said cross plates (17,18), is configured to fit into the first gap (13) and to connect to the connecting rod (1) of said support device for board panels; and
a second profiled rail (9), which has a first longitudinal plate (19) and a second longitudinal plate (20) orthogonally connected to a first cross plate (21) and to a second cross plate (22), wherein an encasement zone, bordered by said longitudinal plates (19,20) and by said cross plates (21,22), is configured to fit into the second gap (14) and to connect to the connecting rod (1) of said support device for board panels; and
a first panel (12), which is configured to fit longitudinally into said first profiled rail (10); and
a second panel (11), which is configured to fit longitudinally into said second profiled rail (9); and
a T-profile element (8), which is configured to fit longitudinally into the interval formed between the first panel (12), the second panel (11) and the intermediate bulkhead (5) of said support device for board panels.

In the preferred embodiments of the board panel support and junction system of the present invention, at least one of the first panel (12) and of the second panel (11) are selected from the group consisting of a board configured for writing, a board configured for supporting sheets of paper, a board configured for supporting objects by magnetic means or a board configured for supporting sheets of paper by pins. A board with surface configured for writing may be, for example, a whiteboard of the type used in offices or classrooms. A board configured for supporting sheets of paper by pins can be made of cork or other material that can be perforated by paper fastening pins, as a person skilled in the art will understand. A board configured for supporting objects by magnetic means comprises a panel with magnetic properties to be magnetically connected to a pin or magnetic button, which supports sheets of paper between the pin or magnetic button and said panel.

As illustrated in [Fig.14], in the preferred embodiments of the board panel support and junction system of the present invention, the T-profile element (8) presents an upper longitudinal plate, a lower longitudinal plate and an inner longitudinal plate, wherein said inner longitudinal plate is orthogonally connected to said upper longitudinal plate and to the lower longitudinal plate and wherein the upper longitudinal plate and the lower longitudinal plate are parallel to each other. Further preferably, the transverse length of the lower longitudinal plate is smaller than the transverse length of the upper longitudinal plate. These preferred embodiments are particularly relevant for the suitable junction between the T-profile element (8) and the first panel (12) and the second panel (11).

Figures 10 and 11 illustrate a preferred embodiment of a first profiled rail (10), wherein the first longitudinal plate (15) and the second longitudinal plate (16) are parallel to each other and wherein each said longitudinal plate (15,16) is orthogonally connected to a first cross plate (17) and to a second cross plate (18), wherein the first cross plate (17) is disposed in an upper position relative to the first longitudinal plate (15) and to the second longitudinal plate (16), and wherein the second cross plate (18) is disposed in an intermediate position relative to the first longitudinal plate (15) and to the second longitudinal plate (16), forming an A-profile for the first profiled rail (10). Accordingly, the end of the first profiled rail (10), namely the encasement zone of the end of the first profiled rail (10), wherein the encasement zone is bordered by the ends of said longitudinal plates (15,16) and of said cross plates (17,18), is configured to fit into the first gap (13) and to connect to the connecting rod (1) of said support device for board panels. Additionally, the zone bordered by the inner faces of the longitudinal plates (15,16) of the first profiled rail (10) and the lower face of said second intermediate cross plate (18) is configured to be connected to the first panel (12). Further preferably, as illustrated in [Fig.10], the inner faces of the longitudinal plates (15,16) disposed in the encasement zone of the first profiled rail (10) include longitudinal projections, which are configured for a firmer connection to the connecting rod (1) of said support device for board panels and to provide greater mechanical resistance to the first profiled rail (10).

Similarly, figures 10 and 11 illustrate a preferred embodiment of a second profiled rail (9), wherein the first longitudinal plate (19) and the second longitudinal plate (20) are parallel to each other and wherein each said longitudinal plate (19,20) is orthogonally connected to a first cross plate (21) and to a second cross plate (22), wherein the first cross plate (21) is disposed in an upper position relative to the first longitudinal plate (19) and to the second longitudinal plate (20), and wherein the second cross plate (22) is disposed in an intermediate position relative to the first longitudinal plate (19) and to the second longitudinal plate (20), forming an A-profile for the second profiled rail (9). Accordingly, the end of the second profiled rail (9), namely the encasement zone of the end of the second profiled rail (9), wherein the encasement zone is bordered by the ends of said longitudinal plates (19,20) and of said cross plates (21,22), is configured to fit into the second gap (14) and to connect to the connecting rod (1) of said support device for board panels. Additionally, the zone bordered by the inner faces of the longitudinal plates (19,20) of the second profiled rail (9) and the lower face of said second intermediate cross plate (22) is configured to be connected to the second panel (11). Further preferably, as illustrated in [Fig.10], the inner faces of the longitudinal plates (19,20) disposed in the encasement zone of the second profiled rail (9) include longitudinal projections, which are configured for a firmer connection to the connecting rod (1) of said support device for board panels and to provide greater mechanical resistance to the second profiled rail (9).

In a third aspect, the present invention refers to a method of preparing of the board panel support and junction system, as defined in the second aspect, characterized by comprising the following steps:
a. Encasement of the first profiled rail (10) into the first gap (13) and connection with the connecting rod (1) of said support device for board panels;
b. Encasement of the second profiled rail (9) into the second gap (14) and connection with the connecting rod (1) of said support device for board panels;
c. Connection between the first panel (12) and said first profiled rail (10);
d. Connection between the second panel (11) and said second profiled rail (9);
e. Insertion of the T-profile element (8) into the interval formed between the first panel (12), the second panel (11) and the intermediate bulkhead (5) of said support device for board panels.

As used throughout the specification, the term "or" is used in the inclusive sense instead of the exclusive sense, unless the exclusive sense is clearly defined in a specific situation. In this context, a phrase of the type "X uses A or B" should be interpreted as including all pertinent inclusive combinations, for example "X uses A", "X uses B" and "X uses A and B".

As used throughout the specification, the indefinite article "a" or "one" should be generally interpreted as "one or more", unless the sense of a singular embodiment is clearly defined in a specific situation.

As presented in this specification, the terms related to examples should be interpreted with the purpose of illustrating an example of something and not indicating a preference.

The subject matter-object described above is provided as an illustration of the present invention and should not be interpreted in a manner that limits it. The terminology employed with the purpose of describing specific embodiments, according to the present invention, should not be interpreted in a way that limits the invention. As used in the specification, the definite and indefinite articles, in their singular form, should be interpreted to include their plural forms as well, unless the context of the specification explicitly indicates otherwise. It shall be understood that the terms "comprise" and "include", when used in this specification, specify the presence of the characteristics, elements, components, steps and related operations, but do not exclude the possibility that other characteristics, elements, components, steps and operations are also included.

All alterations, provided that they do not modify the essential characteristics of the accompanying claims, should be considered within the ambit of protection of the present invention.

### Reference Signs List

1. A connecting rod
2. A first end of the connecting rod
3. A second end of the connecting rod
4. A front bulkhead
5. An intermediate bulkhead
6. A rear bulkhead
7. An orifice
8. A T-profile element
9. A second profiled rail
10. A first profiled rail
11. A second panel
12. A first panel
13. A first gap
14. A second gap
15. A first longitudinal plate of a first rail
16. A second longitudinal plate of a first rail
17. A first cross plate of a first rail
18. A second cross plate of a first rail
19. A first longitudinal plate of a second rail
20. A second longitudinal plate of a second rail
21. A first cross plate of a second rail
22. A second cross plate of a second rail

## Claims

1. A support device for board panels **characterized by** comprising:
a connecting rod (1) with a first end (2) and a second end (3); and
a front bulkhead (4), which has a first portion disposed in a preceding position relative to said connecting rod (1) and a second portion disposed on the connecting rod (1), wherein said first portion is connected to said second portion; and
a rear bulkhead (6), which is disposed in a posterior position relative to said connecting rod (1) and is connected to said second portion of the front bulkhead (4); and
an intermediate bulkhead (5), which is simultaneously connected perpendicularly to a lower face of the front bulkhead (4), connected perpendicularly to a lower face of the connecting rod (1) and connected perpendicularly to a lower face of the rear bulkhead (6); and
an element connecting to a surface including an orifice (7), which is connected to the rear bulkhead (6); wherein
a first gap (13) is bordered by a portion of the lower face of the front bulkhead (4), by a portion of the upper face of the connecting rod (1), by a portion of the lower face of the rear bulkhead (6) and by a portion of the right face of the intermediate bulkhead (5); and wherein a second gap (14) is bordered by a portion of the lower face of the front bulkhead (4), by a portion of the upper face of the connecting rod (1), by a portion of the lower face of the rear bulkhead (6) and by a portion of the left face of the intermediate bulkhead (5).

2. The support device for board panels, according to claim 1, **characterized in that** at least one of the first end (2) and of the second end (3) are selected from the group consisting of a stem of a prism, a stem of a pyramid, a stem of a cylinder or a stem of a cone.

3. The support device for board panels, according to any of the preceding claims, **characterized in that** the connection between the intermediate bulkhead (5), the lower face of the front bulkhead (4), the lower face of the connecting rod (1) and the lower face of the rear bulkhead (6) configure an H-profile.

4. The support device for board panels, according to any of the preceding claims, **characterized in that** the element connecting to a surface including an orifice (7) and the rear bulkhead (6) are disposed sideways relative to the plane including the intermediate bulkhead (5).

5. The support device for board panels, according to any of the preceding claims, **characterized in that** each side of the connecting rod (1) comprises, relative to the intermediate bulkhead (5), at least one cavity.

6. A board panel support and junction system **characterized by** comprising a support device for board panels, as defined in any of the preceding claims, and by additionally comprising:
a first profiled rail (10), which has a first longitudinal plate (15) and a second longitudinal plate (16) orthogonally connected to a first cross plate (17) and to a second cross plate (18), wherein an encasement zone, bordered by said longitudinal plates (15,16) and by said cross plates (17,18), is configured to fit into the first gap (13) and to connect to the connecting rod (1) of said support device for board panels; and
a second profiled rail (9), which has a first longitudinal plate (19) and a second longitudinal plate (20) orthogonally connected to a first cross plate (21) and to a second cross plate (22), wherein an encasement zone, bordered by said longitudinal plates (19,20) and by said cross plates (21,22), is configured to fit into the second gap (14) and to connect to the connecting rod (1) of said support device for board panels; and
a first panel (12), which is configured to fit longitudinally into said first profiled rail (10); and
a second panel (11), which is configured to fit longitudinally into said second profiled rail (9); and
a T-profile element (8), which is configured to fit longitudinally into the interval formed between the first panel (12), the second panel (11) and the intermediate bulkhead (5) of said support device for board panels.

7. The board panel support and junction system, as defined in the preceding claim, **characterized in that** at least one of the first panel (12) and of the second panel (11) is selected from the group consisting of a board configured for writing, a board configured for supporting sheets of paper, a board configured for supporting objects by magnetic means or a board configured for supporting sheets of paper by pins.

8. A method of preparing the board panel support and junction system, as defined in either of claims 6 and 7, **characterized by** comprising the following steps:
a. Encasement of the first profiled rail (10) into the first gap (13) and connection with the connecting rod (1) of said support device for board panels;
b. Encasement of the second profiled rail (9) into the second gap (14) and connection with the connecting rod (1) of said support device for board panels;
c. Connection between the first panel (12) and said first profiled rail (10);
d. Connection between the second panel (11) and said second profiled rail (9);
e. Insertion of the T-profile element (8) in the interval formed between the first panel (12), the second panel (11) and the intermediate bulkhead (5) of said support device for board panels.

## Patentansprüche

1. Eine Haltevorrichtung für Tafelplatten, **dadurch gekennzeichnet, dass** sie das Folgende umfasst:
eine Verbindungsstange (1) mit einem ersten Ende (2) und einem zweiten Ende (3); und
eine vordere Trennwand (4), die einen ersten Abschnitt aufweist, der in einer vorhergehenden Position relativ zu der Pleuelstange (1) angeordnet ist, und einen zweiten Abschnitt, der an der Pleuelstange (1) angeordnet ist, wobei der erste Abschnitt mit dem zweiten Abschnitt verbunden ist; und
eine hintere Trennwand (6), die in einer hinteren Position in Bezug auf die Verbindungsstange (1) angeordnet ist und mit dem zweiten Abschnitt der vorderen Trennwand (4) verbunden ist; und
eine mittlere Trennwand (5), die gleichzeitig senkrecht mit einer Unterseite der vorderen Trennwand (4), senkrecht mit einer Unterseite der Verbindungsstange (1) und senkrecht mit einer Unterseite der hinteren Trennwand (6) verbunden ist; und
ein Element, das mit einer Fläche verbunden ist, die eine Öffnung (7) enthält, die mit der hinteren Trennwand (6) verbunden ist; wobei
ein erster Spalt (13) durch einen Teil der Unterseite der vorderen Trennwand (4), durch einen Teil der Oberseite der Verbindungsstange (1), durch einen Teil der Unterseite der hinteren Trennwand (6) und durch einen Teil der rechten Seite der mittleren Trennwand (5) begrenzt ist; und wobei
ein zweiter Spalt (14) von einem Teil der Unterseite der vorderen Trennwand (4), von einem Teil der Oberseite der Verbindungsstange (1), von einem Teil der Unterseite der hinteren Trennwand (6) und von einem Teil der linken Seite der mittleren Trennwand (5) begrenzt wird.

2. Die Haltevorrichtung für Tafelplatten nach Anspruch 1, **dadurch gekennzeichnet, dass** mindestens eines der ersten Enden (2) und des zweiten Endes (3) aus der Gruppe ausgewählt ist, die aus einem Prismenstiel, einem Pyramidenstiel, einem Zylinderstiel oder einem Kegelstiel besteht.

3. Die Haltevorrichtung für Tafelplatten nach einem der vorhergehenden Ansprüche, **dadurch gekennzeichnet, dass** die Verbindung zwischen der mittleren Trennwand (5), der Unterseite der vorderen Trennwand (4), der Unterseite der Verbindungsstange (1) und der Unterseite der hinteren Trennwand (6) ein H-Profil bildet.

4. Die Haltevorrichtung für Tafelplatten nach einem der vorhergehenden Ansprüche, **dadurch gekennzeichnet, dass** sowohl das Element, das mit einer Fläche verbunden ist, die eine Öffnung (7) enthält, als auch die hintere Trennwand (6) seitlich zur Ebene angeordnet sind, welche die mittlere Trennwand (5) umfasst.

5. Die Haltevorrichtung für Tafelplatten nach einem der vorhergehenden Ansprüche, **dadurch gekennzeichnet, dass** jede Seite der Verbindungsstange (1) in Bezug auf die mittlere Trennwand (5) mindestens einen Hohlraum aufweist.

6. Ein Halte- und Verbindungssystem für Tafelplatten **dadurch gekennzeichnet, dass** es eine Haltevorrichtung für Tafelplatten umfasst, wie in einem der vorhergehenden Ansprüche definiert, und zusätzlich das Folgende umfasst:
eine erste Profilschiene (10), die eine erste Längsplatte (15) und eine zweite Längsplatte (16) aufweist, die orthogonal mit einer ersten Querplatte (17) und einer zweiten Querplatte (18) verbunden sind, wobei ein von den Längsplatten (15, 16) und den Querplatten (17, 18) begrenzter Einfügungsbereich so gestaltet ist, dass er in den ersten Spalt (13) passt und mit der Verbindungsstange (1) der Haltevorrichtung für Tafelplatten verbunden ist; und
eine zweite Profilschiene (9), die eine erste Längsplatte (19) und eine zweite Längsplatte (20) aufweist, die orthogonal mit einer ersten Querplatte (21) und einer zweiten Querplatte (22) verbunden sind, wobei ein von den Längsplatten (19, 20) und den Querplatten (21, 22) begrenzter Einfügungsbereich so gestaltet ist, dass er in den zweiten Spalt (14) passt und mit der Verbindungsstange (1) der Haltevorrichtung für Tafelplatten verbunden ist; und
eine erste Platte (12), die so gestaltet ist, dass sie in Längsrichtung in die erste Profilschiene (10) passt; und
eine zweite Platte (11), die so gestaltet ist, dass sie in Längsrichtung in die zweite Profilschiene (9) passt; und
ein T-Profilelement (8), das so gestaltet ist, dass es in Längsrichtung in den Zwischenraum passt, der zwischen der ersten Platte (12), der zweiten Platte (11) und der mittleren Trennwand (5) der Haltevorrichtung für Tafelplatten gebildet wird.

7. Das Halte- und Verbindungssystem für Tafelplatten nach dem vorhergehenden Anspruch, **dadurch gekennzeichnet, dass** mindestens eine der ersten Platte (12) und der zweiten Platte (11) aus der Gruppe ausgewählt ist, bestehend aus einer zum Schreiben vorgesehenen Platte, einer Platte zum Halten von Papierbögen, einer Tafel zum Halten von Objekten mittels Magnetkraft oder einer Platte zum Halten von Papierbögen mittels Reißzwecken.

8. Ein Verfahren zum Vorbereiten des Halte- und Verbindungssystems für Tafelplatten wie in einem der Ansprüche 6 und 7 definiert, **dadurch gekennzeichnet, dass** es die folgenden Schritte umfasst:
a. Einfügen der ersten Profilschiene (10) in den ersten Spalt (13) und Verbinden mit der Verbindungsstange (1) der genannten Haltevorrichtung für Tafelplatten;
b. Einfügen der zweiten Profilschiene (9) in den zweiten Spalt (14) und Verbinden mit der Verbindungsstange (1) der genannten Haltevorrichtung für Tafelplatten;
c. Verbinden zwischen der ersten Platte (12) und der genannten ersten Profilschiene (10);
d. Verbinden zwischen der zweiten Platte (11) und der genannten zweiten Profilschiene (9);
e. Einführen des T-Profil-Elements (8) in den Zwischenraum, der zwischen der ersten Platte (12), der zweiten Platte (11) und der mittleren Trennwand (5) der genannten Haltevorrichtung für Tafelplatten gebildet ist. Lissabon,

## Revendications

1. Un dispositif de support pour panneaux de planche, **caractérisé en ce qu'**il comprend:
une tige de liaison (1) avec une première extrémité (2) et une deuxième extrémité (3); et
une cloison avant (4), qui comporte une première partie disposée en avant par rapport à ladite tige de liaison (1) et une deuxième partie disposée sur la tige de liaison (1), ladite première partie étant reliée à ladite deuxième partie; et
une cloison arrière (6), qui est disposée dans une position postérieure par rapport à ladite tige de connexion (1) et est reliée à ladite deuxième partie de la cloison avant (4); et
une cloison intermédiaire (5), qui est reliée simultanément perpendiculairement à une face inférieure de la cloison avant (4), perpendiculairement à une face inférieure de la tige de liaison (1) et perpendiculairement à une face inférieure de la cloison arrière (6); et
un élément reliant une surface comprenant un orifice (7), qui est relié à la cloison arrière (6); dans lequel
un premier espace (13) est délimité par une partie de la face inférieure de la cloison avant (4), par une partie de la face supérieure de la tige de liaison (1), par une partie de la face inférieure de la cloison arrière (6) et par une partie de la face droite de la cloison intermédiaire (5); et dans lequel
un deuxième espace (14) est délimité par une partie de la face inférieure de la cloison avant (4), par une partie de la face supérieure de la tige de liaison (1), par une partie de la face inférieure de la cloison arrière (6) et par une partie de la face gauche de la cloison intermédiaire (5).

2. Le dispositif de support pour panneaux de bord, selon la revendication 1, **caractérisé en ce qu'**au moins l'une des première extrémité (2) et deuxième extrémité (3) est choisie parmi le groupe constitué d'un tronc de prisme, d'un tronc de pyramide, d'un tronc de cylindre ou d'un tronc de cône.

3. Le dispositif de support pour panneaux de bord, selon l'une quelconque des revendications précédentes, **caractérisé en ce que** la liaison entre la cloison intermédiaire (5), la face inférieure de la cloison avant (4), la face inférieure de la tige de liaison (1) et la face inférieure de la cloison arrière (6) forme un profil en H.

4. Le dispositif de support pour panneaux, selon l'une quelconque des revendications précédentes, **caractérisé en ce que** l'élément reliant une surface comprenant un orifice (7) et la cloison arrière (6) est disposé latéralement par rapport au plan comprenant la cloison intermédiaire (5).

5. Le dispositif de support pour panneaux de bord, selon l'une quelconque des revendications précédentes, **caractérisé en ce que** chaque côté de la tige de liaison (1) comprend, par rapport à la cloison intermédiaire (5), au moins une cavité.

6. Un système de support et de jonction pour panneaux de bord, **caractérisé en ce qu'**il comprend un dispositif de support pour panneaux de bord, tel que défini dans l'une quelconque des revendications précédentes, et **en ce qu'**il comprend en outre:
un premier rail profilé (10), qui comporte une première plaque longitudinale (15) et une deuxième plaque longitudinale (16) reliées orthogonalement à une première plaque transversale (17) et à une deuxième plaque transversale (18), dans lequel une zone d'encastrement, délimitée par lesdites plaques longitudinales (15, 16) et par lesdites plaques transversales (17, 18), est configurée pour s'insérer dans le premier espace (13) et pour se connecter à la tige de connexion (1) dudit dispositif de support pour panneaux; et
un deuxième rail profilé (9), qui comporte une première plaque longitudinale (19) et une deuxième plaque longitudinale (20) reliées orthogonalement à une première plaque transversale (21) et à une deuxième plaque transversale (22), dans lequel une zone d'encastrement, délimitée par lesdites plaques longitudinales (19, 20) et par lesdites plaques transversales (21, 22), est configurée pour s'insérer dans le deuxième espace (14) et pour se connecter à la tige de connexion (1) dudit dispositif de support pour panneaux; et
un premier panneau (12), qui est configuré pour s'insérer longitudinalement dans ledit premier rail profilé (10); et
un deuxième panneau (11), qui est configuré pour s'insérer longitudinalement dans ledit deuxième rail profilé (9); et
un élément profilé en T (8), qui est configuré pour s'insérer longitudinalement dans l'intervalle formé entre le premier panneau (12), le deuxième panneau (11) et la cloison intermédiaire (5) dudit dispositif de support pour panneaux.

7. Le système de support et de jonction de panneaux, tel que défini dans la revendication précédente, **caractérisé en ce qu'**au moins l'un des premier panneau (12) et deuxième panneau (11) est choisi parmi le groupe comprenant un panneau configuré pour l'écriture, un panneau configuré pour supporter des feuilles de papier, un panneau configuré pour supporter des objets par des moyens magnétiques ou un panneau configuré pour supporter des feuilles de papier par des broches.

8. Un procédé de fabrication du système de support et de jonction de panneaux, tel que défini dans l'une des revendications 6 et 7, **caractérisé en ce qu'**il comprend les étapes suivantes:
a. Encastrement du premier rail profilé (10) dans le premier espace (13) et connexion avec la tige de connexion (1) dudit dispositif de support pour panneaux;
b. Encastrement du deuxième rail profilé (9) dans le deuxième espace (14) et connexion avec la tige de connexion (1) dudit dispositif de support pour panneaux;
c. Connexion entre le premier panneau (12) et ledit premier rail profilé (10);
d. Connexion entre le deuxième panneau (11) et ledit deuxième rail profilé (9);
e. Insertion de l'élément profilé en T (8) dans l'intervalle formé entre le premier panneau (12), le deuxième panneau (11) et la cloison intermédiaire (5) dudit dispositif de support pour panneaux.
